# EUROPEAN PATENT APPLICATION

(11) **EP 4 610 079 A1**
(43) Date of publication of application: **03.09.2025**
(21) Application number: 23882221.7
(22) Date of filing: 28.08.2023
(51) Int. Cl.: B60K 11/04, F01P 5/06, B62D 25/10, F01P 11/08

(54) **WORK VEHICLE**

(30) Priority: 28.10.2022 JP 2022173419
(71) Applicant: Kubota Corporation, Osaka 556-8601 (JP)
(72) Inventor: OKAMOTO, Naoya, Sakai-shi, Osaka 590-0908 (JP); SHOEN, Shigeo, Sakai-shi, Osaka 590-0908 (JP); YAMANAKA, Satoru, Sakai-shi, Osaka 590-0908 (JP)
(74) Representative: Cabinet Beau de Loménie
(86) International application number: PCT/JP2023/030930
(87) International publication number: WO 2024/090006

(57) **Abstract**

This work vehicle includes a metal engine bonnet 21 that houses an engine 20, a radiator 22, and a cooling fan 22b. A front space 2B for taking in cooling outside air is provided forward of the radiator 22 inside the engine bonnet 21. An upper portion of the engine bonnet 21 has, on an inner surface portion thereof forward of the radiator 22, a heat shield layer 4 that suppresses the transmission of heat from the upper portion to the front space 2B.

## Description

### Technical Field

The present invention relates to a work vehicle in which an engine is disposed inside an engine bonnet provided in a motor section in the front portion of a body, and in which a front space capable of taking in outside air for cooling is provided forward of a radiator extending upright in front of the engine.

### Background Art

In this type of work vehicle, outside air for cooling is taken in through the front space in front of the radiator, and the outside air for cooling is supplied to the radiator to cool the engine. In this structure, the temperature of the cooling air supplied from the front space to the radiator tends to become too high particularly during, for example, work performed in the summer when the outside air temperature is high, and this tends to result in a decrease in cooling efficiency. In order to address such a situation, the rotation speed of a cooling fan is increased to take in a larger amount of outside air, or work is temporarily suspended to reduce the load on the engine, for example, and this can result in power loss or time loss (see, for example, Patent Document 1).

### Prior Art Document

### Patent Document

Patent Document 1: JP S52-96145U

### Disclosure of the Invention

### Problem to be Solved by the Invention

In the system described in Patent Document 1, the inside of the engine bonnet is partitioned by a shielding plate into a front space where the radiator is located and a space rearward thereof, and an air guide plate is provided such that cooling air that has passed through the radiator is discharged through an exhaust port formed in a lateral side wall of the engine bonnet. This structure is advantageous in that cooling air that has been warmed by heat exchange in the radiator is discharged to the outside before reaching the rear portion of the engine bonnet, thereby making it possible to reduce the thermal impact on the instruments and the fuel tank in the rear portion.

However, if the outside air temperature rises further, the air temperature in the front space also rises, and the temperature of the cooling air supplied to the radiator rises, thus tending to reduce the cooling efficiency, and as a result, it becomes necessary to, for example, increase the rotation speed of the cooling fan to take in a larger amount of outside air, or to temporarily suspend operation and reduce the amount of engine cooling water circulating to the radiator. For this reason, there is room for improvement in that it is difficult to suppress power loss and a reduction in work efficiency when, for example, the outside air temperature is high.

An object of the present invention is to effectively suppress an increase in the temperature of outside air introduced into the radiator from the front space in the engine bonnet even when the outside air temperature is high.

### Means for Solving Problem

A work vehicle according to an aspect of the present invention includes: an engine; a radiator forward of the engine and configured to cool the engine; a cooling fan between the engine and the radiator and configured to take in outside air from ahead of the radiator and supply the outside air toward the engine; and a metal engine bonnet housing the engine, the radiator, and the cooling fan, the engine bonnet having therein a front space into which outside air for cooling is taken in, at a position forward of the radiator, and the engine bonnet includes an upper portion provided with, on an inner surface portion forward of the radiator, a heat shield layer configured to suppress transmission of heat from the upper portion to the front space.

According to the present invention, even if the temperature of the engine bonnet becomes particularly high due to the influence of the outside air temperature and excess heat from the engine itself and related devices, since the heat shield layer is provided on the inner surface portion forward of the radiator, it is possible to minimize the transmission of heat from the engine bonnet to the cooling air taken into the front space.

In other words, even if the temperature of the outer surface of the engine bonnet itself becomes high, heat is dissipated outside the engine bonnet through heat exchange with the outside air, but at the inner surface portion forward of the radiator, the presence of the heat shield layer can suppress the phenomenon of heat from the engine bonnet itself being released into the front space. This has an advantage that the outside air taken into the front space is prevented from being significantly affected and heated by heat emitted from the engine bonnet, thereby reducing the risk of a reduction in the heat exchange performance of the radiator.

In a preferred embodiment of the present invention, the work vehicle further includes a partition member disposed between an outer peripheral portion of the radiator and an inner surface of the engine bonnet and separating the front space from a rear space in which the engine is provided inside the engine bonnet.

According to this configuration, the front space and the rear space are separated by the partition member, and therefore the flow of air in the body between the front space and the rear space is blocked at the outer peripheral portion of the radiator. This enables avoiding the case where air in the front space flows into the rear space without passing through the radiator, and the case where high temperature air in the rear space flows into the cooling air taken into the front space, thereby further reducing the risk of a reduction in the heat exchange performance of the radiator.

In a preferred embodiment of the present invention, the heat shield layer includes a rear end portion in contact with a front end portion of the partition member.

According to this configuration, the rear end portion of the heat shield layer is in contact with the front end portion of the partition member, and therefore it is possible to block heat from near the partition member, which is the portion of the front space with the highest heat dissipation temperature, near the rear space where the engine is located, thereby making it easier to achieve even more effective heat insulation.

In a preferred embodiment of the present invention, the engine bonnet includes: left and right side wall portions each having a wall surface extending in an up-down direction; and a ceiling wall portion spanning upper edges of the left and right side wall portions, the engine bonnet has a gate-shaped cross section taken in a direction orthogonal to a front-rear direction, the ceiling wall portion includes: a flat surface portion extending in a left-right direction; and a pair of end curved portions respectively in a vicinity of two end portions of the flat surface portion in the left-right direction, each of the end curved portions being curved from a direction along the flat surface portion toward a direction approaching the wall surface of a corresponding one of the side wall portions, and the heat shield layer is provided only on an inner surface of the ceiling wall portion including the flat surface portion and the end curved portions.

According to this configuration, the range over which the heat shield layer is provided is a range that is effective in avoiding a rise in the temperature of the air in the front space. As a result, compared with a case in which a heat shield layer is provided on the entirety of the inner surface in the front space, effective heat insulation can be achieved even though the range over which the heat shield layer is provided is small, and a reduction in cost can be achieved more easily.

In a preferred embodiment of the present invention, the engine bonnet includes a side wall portion having a side grille in communication with the front space, and the heat shield layer is provided in such a manner that a front end of the heat shield layer covers a front portion of the inner surface portion, the front portion being forward of a front end of the side grille.

According to this configuration, the transmission of heat from the engine bonnet side to outside air taken in through the side grille overall can be suppressed.

In a preferred embodiment of the present invention, the work vehicle further includes an oil cooler in the front space, and the heat shield layer is provided on the inner surface portion in such a manner as to cover an upper portion of the oil cooler.

According to this configuration, it is possible to also suppress the transmission of heat from the engine bonnet side to the oil cooler disposed in the front space.

In a preferred embodiment of the present invention, the heat shield layer includes a heat insulating sheet and is adhered to the inner surface portion.

According to this configuration, the formation of the heat shield layer can be performed more easily.

### Brief Description of the Drawings

FIG. 1 is a left side view of a tractor.
FIG. 2 is a plan view of the tractor.
FIG. 3 is a left side view showing the inside of an engine room of a motor section.
FIG. 4 is a plan view showing the inside of the engine room of the motor section.
FIG. 5 is a cross-sectional view showing partitioning around a radiator in the engine room.
FIG. 6 is a cross-sectional view showing a heat shield layer portion.

### Best Mode for Carrying out the Invention

Hereinafter, an embodiment of the present invention will be described with reference to the drawings.

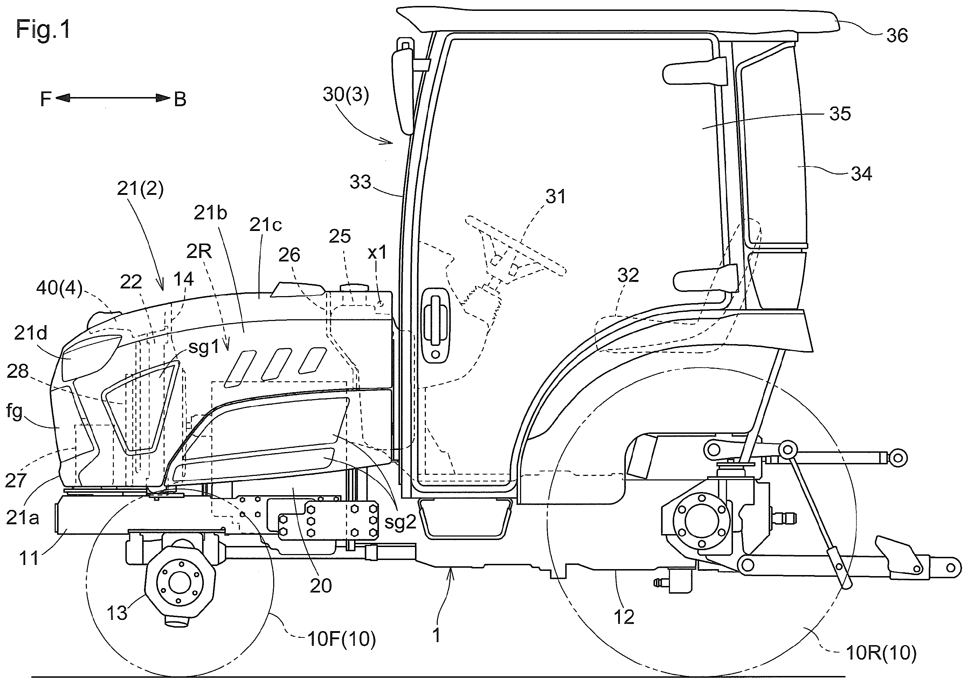

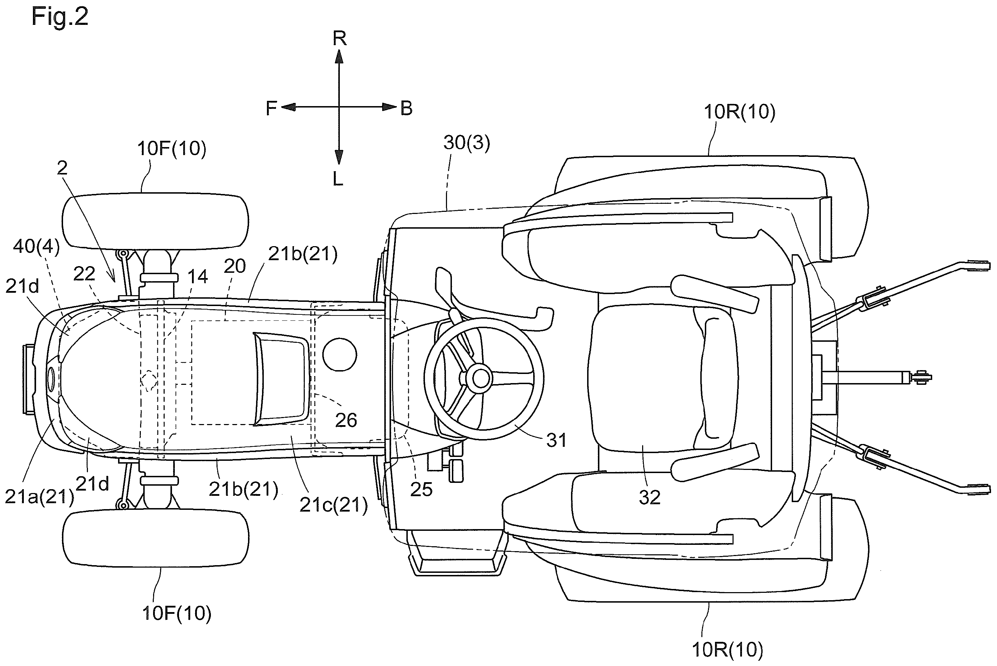

Note that in the description of this embodiment, the front-rear direction and the left-right direction are defined as follows, unless otherwise specified. Specifically, when a tractor (an example of a work vehicle) to which the present invention is applied is traveling for work, the forward travel direction (see arrow F in FIGS. 1 and 2) is "front", the reverse travel direction (see arrow B in FIGS. 1 and 2) is "rear", the direction corresponding to the right side (see arrow R in FIG. 2) with respect to the forward-facing position in the front-rear direction is "right", and similarly, the direction corresponding to the left side (see arrow L in FIG. 2) is "left".

### Overall Configuration

The tractor, which is an example of a work vehicle shown in the present embodiment, is configured as described below.

As shown in FIG. 1, a motor section 2 is provided in a front portion of a body frame 1 (corresponding to a body), and a driving section 3 is provided in a rear portion of the body frame 1. The body frame 1 is supported by a travel device 10, which includes front wheels 10F (corresponding to a front travel device) which are steerable wheels arranged on the left and right sides of the motor section 2, and non-steerable rear wheels 10R (corresponding to a rear travel device) arranged on the left and right sides of the driving section 3. In the travel device 10, the front portion of the body is supported by the front wheels 10F configuring a front travel device, and the rear portion of the body is supported by the rear wheels 10R configuring a rear travel device. The front wheels 10F and the rear wheels 10R are configured as four-wheel drive type wheels that are each driven to rotate.

As shown in FIGS. 1 and 2, the body frame 1 includes a front frame 11 connected to a water-cooled diesel engine 20 (hereinafter referred to as the engine), a clutch housing (not shown) connected to a rear portion of the engine 20, and a transmission case 12 connected to a rear portion of the clutch housing, and these components are integrated to configure a monocoque structure.

The front wheels 10F are supported by a front axle case 13, and the front axle case 13 is supported by a lower portion of the body frame 1 so as to be capable of rolling about a swing axis (not shown) that extends in the front-rear direction.

### Motor Section

As shown in FIGS. 1 to 3, the motor section 2 includes a metal engine bonnet 21 that forms a space in which the engine 20 and the like are arranged.

An engine room 2R formed inside the engine bonnet 21 is divided into a rear space 2A located rearward of a radiator 22, which is for cooling the engine 20, in the front-rear direction of the body, and a front space 2B located forward of the radiator 22 in the front-rear direction of the body.

The radiator 22 has an intake face 22a on the front side in the front-rear direction of the body, and a cooling fan 22b on the rear side in the front-rear direction of the body, and is configured to draw in cooling air from the front to the rear of the body.

A partition member 14 that separates the front space 2B from the rear space 2A is provided between the outer peripheral portion of the radiator 22 and the inner surface of the engine bonnet 21. The partition member 14 is made of, for example, a synthetic resin member such as a sponge-like insulating material, and is provided to block the flow of air between the front space 2B and the rear space 2A and also to suppress the transfer of radiant heat.

The rear space 2A, which is located in an area rearward of the radiator 22 in the front-rear direction of the body, is a space for provision of, for example, the engine 20, an air cleaner 23 that filters air supplied to the engine 20, and a DPF (Diesel Particulate Filter) 24, which is an example of an exhaust treatment device. The air cleaner 23 and the DPF 24 are disposed in a small space that is above the engine 20 and between the engine 20 and the engine bonnet 21 in the engine room 2R. In terms of the positional relationship in the front-rear direction, the air cleaner 23 is located forward of and close to the radiator 22, whereas the DPF 24 is provided at a position rearward of the air cleaner 23 and spaced apart from the radiator 22.

A fuel tank 25 is disposed in the space inside the engine bonnet 21 but rearward of the engine 20 and the DPF 24, such that the upper portion and lateral side portions are surrounded by the engine bonnet 21. A heat insulating partition 26 is provided between the fuel tank 25 and the engine 20 and DPF 24 ahead thereof, such that radiant heat from the engine 20 and the DPF 24 is not directly transmitted to the fuel tank 25.

Engine-related devices such as a battery 27, an oil cooler 28, a reserve fuel tank 29, a condenser 37, and the like are arranged in the front space 2B for engine-related devices, which is located in an area forward of the intake face 22a of the radiator 22 in the front-rear direction of the body.

The engine bonnet 21 is an integrated member that includes a front cover portion 21a, which has a ventilated front grille fg covering the front end portion of the motor section 2, left and right side wall portions 21b covering the lateral side portions of the motor section 2, a ceiling wall portion 21c covering the upper portion of the motor section 2, and headlights 21d, for example. The engine bonnet 21 is configured such that the front end can open and close by swinging up and down about a laterally-extending support shaft x1 located at the upper portion of a tank support frame 15 extending upright from the body frame 1.

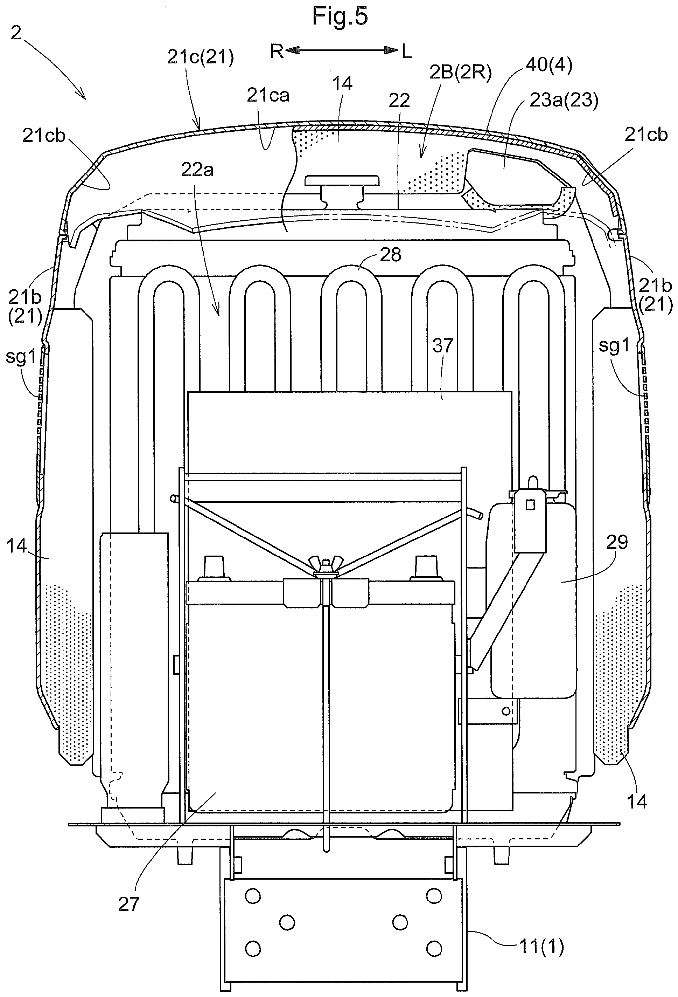

As shown in FIG. 5, the engine bonnet 21 includes side wall portions 21b respectively located on the left and right sides and having wall surfaces extending in the up-down direction, and a ceiling wall portion 21c spanning the upper edges of the left and right side wall portions so as to cover the upper portion of the motor section 2. The ceiling wall portion 21c and the left and right side wall portions 21b are formed to have a gate-shaped cross section taken in a direction orthogonal to the front-rear direction.

The ceiling wall portion 21c has a flat surface portion 21ca extending horizontally, in the central region in the left-right direction. Two end curved portions 21cb, which curve from a direction along the flat surface portion 21ca toward the vertically extending wall surface of the lateral side wall portion 21b, are provided so as to be respectively continuous with the two end portions of the flat surface portion 21ca in the left-right direction, and overall are shaped as curved plates that protrude upward.

The left and right side wall portions 21b are substantially shaped as a flattened plate, and are joined by welding to the lower end portions of the end curved portions 21cb.

The side wall portions 21b each include a front side grille sg1, which has ventilation holes for taking in outside air into the front space 2B, forward of the radiator 22, and a rear side grille sg2, which has ventilation holes for discharging hot air from the engine room 2R through the rear space 2A to the outside, forward of the radiator 22.

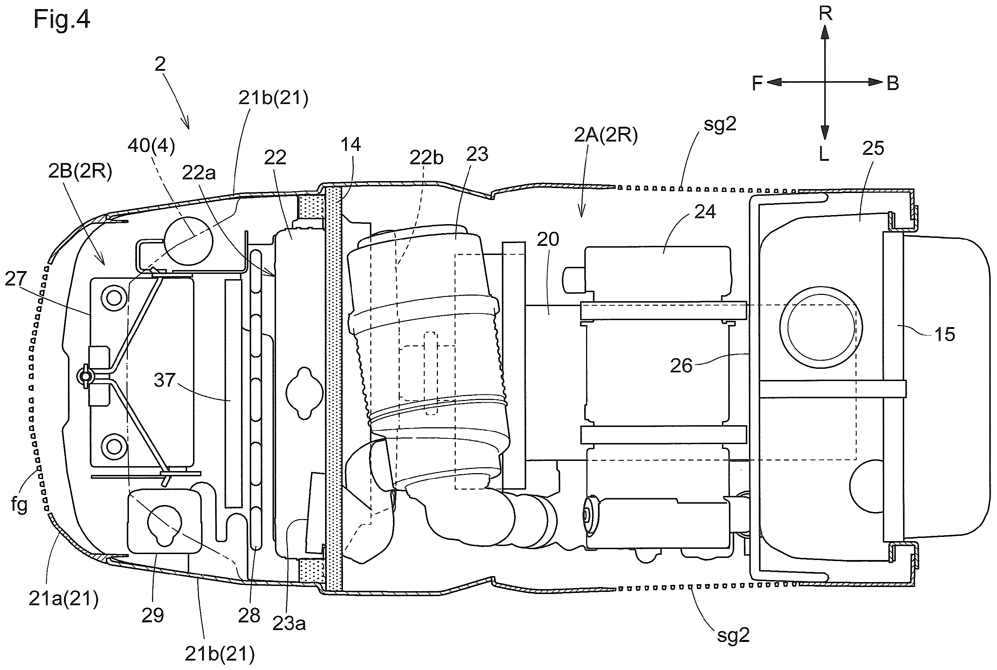

Inside the engine bonnet 21, an air intake port 23a of the air cleaner 23 is provided facing forward at a position rearward of the engine 20 and forward of the radiator 22 in the front-rear direction of the body. As shown in FIG. 4, the air intake port 23a is open in the front space 2B, and is provided so as to take in outside air from the region in front of the radiator 22 via the air intake port 23a.

### Driving Section

The driving section 3, which is provided rearward of the motor section 2, includes a cabin 30 that covers the riding space. A steering wheel 31 for steering the front wheels 10F, a driver seat 32, and the like are provided in the cabin 30.

A front surface 33 and a rear surface 34 of the cabin 30 are made of transparent glass, thereby allowing the driver to see ahead and behind the vehicle body while seated in the driver seat 32. The left side surface of the cabin 30 is constituted by a transparent glass door 35, and the door 35 can be opened and closed to enter and exit the space in the cabin 30.

The cabin 30 also has a transparent glass window on the right side surface (not shown), thereby allowing the driver to see the outside surroundings of the cabin 30 in the front-rear and left-right directions, excluding a roof portion 36, from inside the cabin 30.

### Heat Shield Layer

A heat shield layer 4 is provided on the inner surface of the engine bonnet 21.

The upper portion of the engine bonnet 21 has, on an inner surface portion thereof forward of the radiator 22, the heat shield layer 4 that includes a heat insulating sheet 40 and covers the front space 2B.

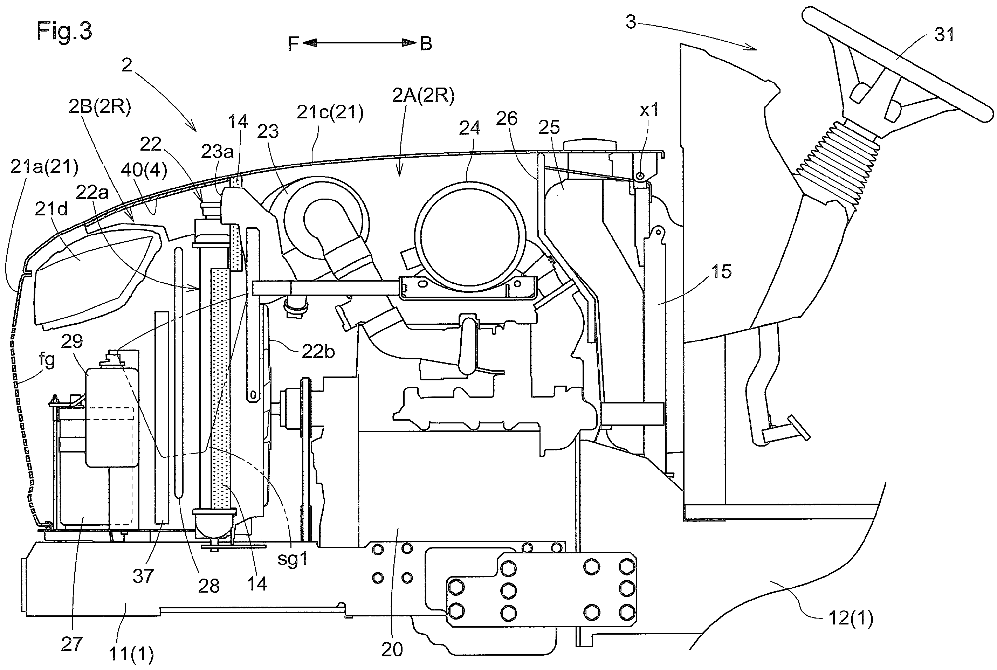

As shown in FIGS. 3 to 5, the region of the inner surface of the upper portion of the engine bonnet 21 to which the heat insulating sheet 40 serving as the heat shield layer 4 is attached, is forward of the radiator 22 in the front-rear direction, and the front end is at a position substantially reaching the front end of the engine bonnet 21.

In a side view, with respect to the region forward of the radiator 22, the range of the heat shield layer 4 in the front-rear direction extends to a position forward of the front end of the front side grille sg1 formed on the side wall portion 21b.

By thus defining the range in the front-rear direction of the heat shield layer 4, the upper portions of heat-generating components such as the oil cooler 28 and the battery 27 located in the front space 2B are also covered by the heat shield layer 4.

In the left-right direction, as shown in FIGS. 4 and 5, the heat insulating sheet 40 is attached so as to extend across the flat surface portion 21ca of the ceiling wall portion 21c and the end curved portions 21cb continuous with the two sides thereof. The heat insulating sheet 40 is not provided on the side wall portions 21b below the lower ends of the end curved portions 21cb.

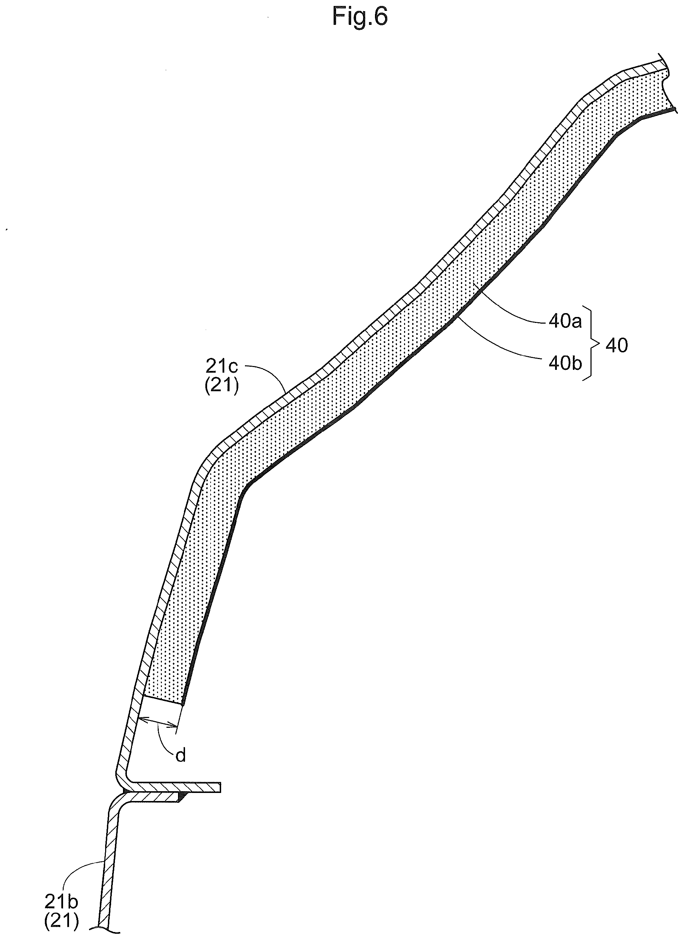

As shown in FIG. 6, the heat insulating sheet 40 is constituted by a heat insulating member 40a attached in contact with the inner surface of the engine bonnet 21, and a heat shielding sheet 40b that is positioned a predetermined distance d1 away from the inner surface of the engine bonnet 21 with the heat insulating member 40a therebetween.

The heat insulating member 40a is made of a heat-resistant sponge-like synthetic resin material such as urethane, and the heat shielding sheet 40b is made of a material having a heat shielding function such as an aluminum sheet.

### Other Embodiments

The following describes other embodiments. The following alternative embodiments may be applied in combination with the above-described embodiment as long as no contradiction arises. The scope of the present invention is not limited to the content of these embodiments.
(1) In the above embodiment, the driving section 3 is illustrated as having a structure including the cabin 30, but the present invention is not limited to this structure.

For example, a structure is possible in which the steering wheel 31, the driver seat 32, and the like are provided, but the cabin 30 is not provided.

Other configurations may be the same as those of the above-described embodiment.

(2) In the above-described embodiment, a tractor having a four-wheel drive structure with steerable driven front wheels 10F and non-steerable driven rear wheels 10R as the travel device 10 is illustrated as an example, but the present invention is not limited to this structure.

For example, the vehicle may be a two-wheel drive vehicle in which the front wheels 10F are front wheels 10F that are steerable and non-driven, or the front wheels 10F may be non-steerable and the rear wheels 10R may be steerable.

Also, instead of wheels, either the front travel device or the rear travel device may be made steerable and the other one may be a crawler travel device, or a series-type crawler travel device in which the front travel device and the rear travel device are integrated may be used.

Other configurations may be the same as those of the above-described embodiment.

(3) In the above embodiment, an example is illustrated in which the heat insulating sheet 40 is attached as the heat shield layer 4, but the present invention is not limited to this structure.

For example, the heat shield layer 4 may be formed by, for example, spraying a paint having a heat insulating function to form a coating film, and the heat shield layer 4 need only have appropriate heat insulating and heat shielding properties.

Other configurations may be the same as those of the above-described embodiment.

(4) In the above embodiment, an example is illustrated in which the heat shield layer 4 is provided only on the ceiling wall portion 21c in the front space 2B, but the present invention is not limited to this structure.

For example, the heat shield layer 4 may extend across the ceiling wall portion 21c in the front space 2B and the side wall portions 21b.

Furthermore, the range of the heat shield layer 4 in the front-rear direction is not limited to the region forward of the radiator 22 in the front space 2B, and it goes without saying that the heat shield layer 4 may be provided in a range including the region above the radiator 22. Furthermore, the range in which the heat shield layer 4 is provided in the front-rear direction is not limited to a range reaching the front end of the engine bonnet 21, and need only be set appropriately within a range in which an appropriate heat shielding effect can be achieved.

Other configurations may be the same as those of the above-described embodiment.

(5) In the above embodiment, an example is illustrated in which a diesel engine is used as the engine 20 disposed in the motor section 2, and an exhaust treatment device having a DPF is provided, but the present invention is not limited to this structure.

For example, a diesel engine or a gasoline engine that does not have a DPF may be used.

### Industrial Applicability

The present invention is applicable to not only tractors, but also to agricultural work vehicles (e.g., front loaders, grass cutters, and rice transplanters), civil engineering work vehicles (e.g., wheel loaders), forklifts, transport vehicles, and the like.

### Description of Reference Signs

- 2A: Rear space
- 2B: Front space
- 3: Driving section
- 4: Heat shield layer
- 14: Partition member
- 20: Engine
- 21: Engine bonnet
- 21b: Side wall portion
- 21c: Ceiling wall portion
- 21ca: Flat surface portion
- 21cb: End curved portion
- 22: Radiator
- 22b: Cooling fan
- sg1: Side grille
- 28: Oil cooler
- 40: Heat insulating sheet

## Claims

1. A work vehicle comprising:
an engine;
a radiator forward of the engine and configured to cool the engine;
a cooling fan between the engine and the radiator and configured to take in outside air from ahead of the radiator and supply the outside air toward the engine; and
a metal engine bonnet housing the engine, the radiator, and the cooling fan,
the engine bonnet having therein a front space into which outside air for cooling is taken in, at a position forward of the radiator, and
the engine bonnet includes an upper portion provided with, on an inner surface portion forward of the radiator, a heat shield layer configured to suppress transmission of heat from the upper portion to the front space.

2. The work vehicle according to claim 1, further comprising:
a partition member disposed between an outer peripheral portion of the radiator and an inner surface of the engine bonnet and separating the front space from a rear space in which the engine is provided inside the engine bonnet.

3. The work vehicle according to claim 2,
wherein the heat shield layer includes a rear end portion in contact with a front end portion of the partition member.

4. The work vehicle according to any one of claims 1 to 3,
wherein the engine bonnet includes:
left and right side wall portions each having a wall surface extending in an up-down direction; and
a ceiling wall portion spanning upper edges of the left and right side wall portions,
the engine bonnet has a gate-shaped cross section taken in a direction orthogonal to a front-rear direction,
the ceiling wall portion includes:
a flat surface portion extending in a left-right direction; and
a pair of end curved portions respectively in a vicinity of two end portions of the flat surface portion in the left-right direction, each of the end curved portions being curved from a direction along the flat surface portion toward a direction approaching the wall surface of a corresponding one of the side wall portions, and
the heat shield layer is provided only on an inner surface of the ceiling wall portion including the flat surface portion and the end curved portions.

5. The work vehicle according to any one of claims 1 to 4,
wherein the engine bonnet includes a side wall portion having a side grille in communication with the front space, and
the heat shield layer is provided in such a manner that a front end of the heat shield layer covers a front portion of the inner surface portion, the front portion being forward of a front end of the side grille.

6. The work vehicle according to any one of claims 1 to 5, further comprising:
an oil cooler in the front space,
wherein the heat shield layer is provided on the inner surface portion in such a manner as to cover an upper portion of the oil cooler.

7. The work vehicle according to any one of claims 1 to 6,
wherein the heat shield layer includes a heat insulating sheet and is adhered to the inner surface portion.
